# EUROPÄISCHE PATENTSCHRIFT

(11) **EP 3 741 522 B1**
(45) Veröffentlichungstag und Bekanntmachung des Hinweises auf die Patenterteilung: **11.05.2022**
(21) Anmeldenummer: 20163485.4
(22) Anmeldetag: 17.03.2020
(51) Int. Cl.: B25J 19/00

(54) **LEITUNGS-RÜCKZGSYSTEM**
LINE RETRACTION SYSTEM
SYSTÈME DE RÉTRACTION POUR CONDUITES

(30) Priorität: 13.05.2019 DE 102019112399
(43) Veröffentlichungstag der Anmeldung: 25.11.2020
(73) Patentinhaber: Sumcab Specialcable GmbH, 74629 Pfedelbach (DE)
(72) Erfinder: STORCH, Norman, 74613 Öhringen (DE)
(74) Vertreter: Herrmann, Jochen

(56) Entgegenhaltungen:
- EP-A1- 3 112 098
- EP-A2- 2 913 162

## Beschreibung

Die Erfindung betrifft ein Leitungs-Rückzugssystem für einen Industrieroboter zur Straffung zumindest einer entlang eines Roboterarms geführten Zuführanordnung, insbesondere eines Zuführschlauchs und/oder einer Zuführungsleitung und/oder eines Leitungspakets zum Längenausgleich in Folge einer Bewegung des Roboterarms, mit zwei Führungsstangen, auf oder an denen ein Schlitten gelagert und längs der Führungsstangen gegen die Vorspannung wenigstens einer Feder verstellbar ist, wobei die Führungsstangen an Haltern befestigt sind, wobei der Schlitten zwischen den Haltern geführt ist, wobei an dem Schlitten eine Befestigungsanordnung für die Zuführanordnung befestigt ist und wobei an den Haltern eine Verkleidung zur zumindest bereichsweisen Abdeckung des Schlittens gehalten ist.

Aus EP 1 848 571 B1 ist ein Leitungs-Rückzugssystem bekannt. Hierbei wird eine Zuführanordnung zur Führung eines Schlauchpakets entlang eines insbesondere mehrachsigen Roboterarms eines Industrieroboters geführt. Das Schlauchpaket enthält mehrere Einzelleitungen, über die eine am Ende des Roboterarms angeordnete Roboterhand und ein daran angeordnetes Werkzeug versorgt werden. Die Einzelleitungen sind üblicherweise von einem Schutzmantel umhüllt und bilden so das Schlauchpaket. Um Relativbewegungen zwischen den Armabschnitten des Roboterarms für das Schlauchpaket auszugleichen, sieht die EP 1 848 571 B1 ein in Längsrichtung verschiebliches Befestigungselement vor, an dem das Schlauchpaket über eine Klemmschelle gehalten ist. Damit das Befestigungselement verschoben werden kann, ist es fest mit der Gleitstange verbunden, welches wiederum gegen die Rückstellkraft einer Feder in einem ortsfesten Gleitführungselement gelagert ist. Durch eine auf das Schlauchpaket ausgeübte Zugkraft wird das Befestigungselement mit der Gleitstange gegen die Federkraft der Feder verschoben. Lässt die Zugkraft nach, wird das Befestigungselement mit der Feder wieder zurückgedrückt. Das Schlauchpaket bleibt somit immer gespannt und verfängt sich nicht an dem Roboterarm. Nachteilig bei dieser Leitungsführungseinrichtung ist, dass die Gleitstangen nur in einem vergleichsweise kurzen Teilabschnitt von dem Gleitführungselement gehalten sind, insbesondere die ausgezogenen Gleitstangen bilden für seitlich auf das Befestigungselement einwirkende Kräfte einen großen Hebel. Solche auf das Befestigungselement, beispielsweise durch das Schlauchpaket, übertragene, seitlich wirkende Kräfte führen daher bei weit ausgezogenen Gleitstangen zu einer hohen Momentenbelastung des Gleitführungselements und der darin vorgesehenen Gleithülsen. Dies kann die Bewegung der Gleitstangen behindern und zu einem hohen Verschleiß der Gleithülsen führen. Weiterhin muss sichergestellt sein, dass die Verfahrwege der Gleitstangen und des Befestigungselements vor und hinter dem Gleitführungselement frei bleiben. Hier bietet der gezeigte Aufbau keine konstruktiven Maßnahmen, sodass diese gesondert anzubringen sind.

Ein weiteres Leitungs-Rückzugssystem ist aus der EP 2 913 162 A2 bekannt. Hierbei ist ein Schlitten auf zwei zueinander parallelen Führungsstangen mittels Linear-Führungselementen verstellbar gehalten. Die beiden Führungsstangen sind an den gegenüberliegenden Enden mit Haltern verbunden. Auf dem Schlitten ist ein Befestigungsblock angeordnet, der eine Befestigungsanordnung für die Zuführanordnung, insbesondere eine Klemmschelle hält. Der Befestigungsblock hält die Befestigungsanordnung im Abstand zu der Oberseite des Schlittens. Auf diese Weise kann die Klemmschelle innerhalb eines Gehäuses geführt werden, wobei der Befestigungsblock durch einen Durchbruch in diesem Gehäuse geführt ist. Das Gehäuse ist zweiteilig aus einem Unterteil und einem Oberteil gebildet, wobei das Oberteil mit dem Unterteil über ein Filmscharnier verbunden ist. Nachdem das zu führende Leitungspaket mit der Klemmschelle verbunden wurde, kann das Gehäuse verschlossen werden. Bei diesem bekannten Leitungs-Rückzugssystem verfährt der Schlitten in einem abgegrenzten Bereich zwischen den Haltern. Hierdurch besteht nicht die Gefahr, dass wie bei der EP 1 848 571 B1 durch aus dem Leitungs-Rückzugssystem herausfahrende Bauteile (Führungsstangen) die Gefahr von Kollisionen mit dem Schlauchpaket entstehen. Insbesondere sind hier keine zusätzlichen konstruktiven Maßnahmen zur Kollisionsverhinderung erforderlich.

Aus der EP 2 913 162 A1 ist ein weiteres Leitungs-Rückzugssystem für einen Industrieroboter zur Straffung einer entlang des Roboterarms geführten Zuführanordnung bekannt, das einen auf einer Führungsschiene gelagerten und längs der Führungsschiene gegen die Vorspannung einer Feder verstellbaren Schlitten aufweist, wobei an dem Schlitten eine Befestigungsanordnung für die Zuführanordnung befestigt ist, wobei eine von einer Abdeckung gebildete Verkleidung zur bereichsweisen Abdeckung des Schlittens angeordnet ist, die eine Deckwand aufweist, an die zwei Seitenwände angeschlossen sind, die jeweils eine Durchführung aufweisen, und wobei die Befestigungsanordnung auf einem bügelförmigen Träger befestigt ist, der einen Halteabschnitt aufweist, der die Befestigungsanordnung trägt und oberhalb der Deckwand hält.

Nun ist es so, dass Industrieroboter häufig in rauen Betriebseinsatz verwendet werden, beispielsweise bei der Entgratung von Metallbauteilen. Hierbei werden Metallteile von einem Werkstück abgetragen, die zu Verunreinigungen führen können. Wenn diese Metallteile in den Bereich der Schlittenführung des Leitungs-Rückzugssystems gelangen, so kann dies eine Funktionsbeeinträchtigung oder einen erhöhten Verschleiß mit sich bringen.

Es ist daher Aufgabe der Erfindung, ein Leitungs-Rückzugssystem bereitzustellen, mit dem sich eine zuverlässige Funktion auch im rauen Betriebseinsatz sicherstellen lässt.

Diese Aufgabe wird durch ein Leitungs-Rückzugssystem gemäß Anspruch 1 gelöst.

Der Schlitten wird geschützt hinter der Verkleidung angeordnet und mittels der Deckwand und den beiden Seitenwänden dreiseitig abgedeckt. Auf der verbleibenden Seite schützt der Industrieroboter, an dem das Leitungs-Rückzugssystem angeordnet ist, den Schlitten. Der bügelförmige Träger ist mit dem Schlitten verbunden und aus dem von der Abdeckung gebildeten Schutzbereich herausgeführt, so dass der Halteabschnitt für die Befestigungsanordnung, insbesondere für die Klemmschelle, außerhalb des von der Abdeckung geschützten Bereiches angeordnet ist. Hier kann die zu führende Zuführanordnung sicher und einfach an der Befestigungsanordnung angekoppelt werden.

Gemäß einer bevorzugten Ausgestaltungsvariante der Erfindung kann es vorgesehen sein, dass an den Halteabschnitt zwei seitliche Distanzstücke angeschlossen sind, wobei die Distanzstücke im Abstand zu den Außenseiten der beiden Seitenwände der Abdeckung geführt sind, und dass von den Distanzstücken jeweils ein Befestigungsabschnitt abgewinkelt ist, der durch die ihm jeweils zugeordnete Durchführung der Seitenwand der Abdeckung hindurchgeführt und mit dem Schlitten verbunden ist. Dadurch, dass der Träger mit seinem Halteabschnitt und den beiden Distanzstücken im Abstand zu den zugeordneten Bereichen der Abdeckung steht, können eventuell anfallende Verunreinigungen sich hier nicht verklemmen, sondern fallen vielmehr schwerkraftbedingt von der Abdeckung ab. Infolge der geschlossenen Ausführung der Abdeckung gelangen diese Teile dann auch nicht in den Führungsbereich des Schlittens, sodass eine zuverlässige Funktionalität der Schlitten-Führung auch im rauen Einsatz stets aufrechterhalten bleibt.

Eine einfach zu fertigende und zu montierende Bauweise ergibt sich dann, wenn vorgesehen ist, dass die Seitenwände im Bereich ihrer der Deckwand abgewandten Seiten mit jeweils einer Ausnehmung versehen sind, die die Durchführungen bilden.

Gemäß einer möglichen Erfindungsvariante kann es vorgesehen sein, dass die Abdeckung haubenartig und im Querschnitt U-förmig mit der Deckwand und den beiden Seitenwänden ausgebildet ist, dass die Abdeckung mit ihren längsseitigen Enden an die Halter angekoppelt und mit diesen verbunden ist, wobei die Halter die längsseitigen, von der Deckwand und den beiden Seitenwänden der Abdeckung gebildeten Öffnungsbereiche, verschließen. Die U-förmige Abdeckung verschließt zusammen mit den beiden Haltern den Führungsbereich für den Schlitten auf fünf Seiten, sodass sich ein optimaler Schutz bei gleichzeitig einfacher Bauweise ergibt.

Wenn vorgesehen ist, dass die wenigstens eine Feder als Zugfeder ausgebildet ist, die an ihren, dem Schlitten zugewandten Federende eine Federöse aufweist, wobei diese Federöse in eine Aufnahme des Schlittens eingeschoben ist, dass eine in den Schlitten eingebrachte Befestigungsaufnahme, insbesondere eine Gewindeaufnahme in dem Bereich der Aufnahme des Schlittens mündet, und dass ein Befestigungselement, insbesondere ein Schraubelement, welches in die Befestigungsaufnahme des Schlittens eingesetzt ist, in die Federöse eingreift und diese formschlüssig festhält, dann wird eine zuverlässige Befestigung der Feder am Schlitten bewirkt, die sich auch bei ruckartigen schnellen Richtungswechseln des Industrieroboters nicht lösen kann. Das andere Federende kann vorzugsweise in gleicher Weise mit dem zugeordneten Halter verbunden sein

Eine zuverlässige Fixierung des Trägers an dem Schlitten kann beispielsweise auf einfache Weise derart ausgeführt sein, dass der Schlitten an seiner der Deckwand der Abdeckung abgewandten Seite einen Boden aufweist, in den Gewindeaufnahmen eingebracht sind, dass der Träger mit seinen beiden Befestigungsabschnitten an dem Boden anliegt, und dass die Befestigungsabschnitte mit dem Boden mittels der Gewindeaufnahmen verschraubt sind.

Im Rahmen der Erfindung kann der Träger als ein Stanz-Biegeteil ausgebildet sein, das einheitlich mit dem Schlitten verbaut wird. Denkbar ist es jedoch auch, dass der Träger aus mehreren Bauteilen, vorzugsweise aus zwei baugleichen Bügelteilen zusammengesetzt ist.

Erfindungsgemäß kann es beispielsweise vorgesehen sein, dass der Halteabschnitt des Trägers im Abstand zu einem Deckabschnitt des Schlittens und die Distanzstücke des Trägers im Abstand zu zugeordneten Seiten des Schlittens stehen, um einen durchgehenden Abstandsbereich zu schaffen. Dieser Abstandsbereich verhindert, dass sich abgetragene Materialien, beispielsweise abgefräste Partikel im Bereich zwischen dem Träger und der Abdeckung verklemmen und so eine Funktionsbeeinträchtigung herbeiführen würden. Weiterhin kann es vorgesehen sein, dass die Abdeckung so dimensioniert ist, dass sie mit ihrem stirnseitigen Ende durch diesen Abstandsbereich hindurch gesteckt und in ihre Montageposition gebracht werden kann. Auf diese Weise lässt sich die Abdeckung, beispielsweise zu Wartungszwecken, einfach abbauen. Sie muss lediglich gelöst werden und kann dann einfach aus dem Abstandsraum herausgezogen werden. In umgekehrter Weise lässt sie sich dann auch wieder an dem Leitungs-Rückzugssystem anbauen.

Gemäß einer denkbaren Erfindungsvariante kann es vorgesehen sein, dass der Adapter zwei Endstücke aufweist, die mittels eines Verbindungsstücks vorzugsweise einteilig miteinander verbunden sind, dass die beiden Halter vorzugsweise baugleich ausgeführt sind und eine Befestigungsfläche aufweisen, mit der sie auf die Oberseite des plattenförmigen Adapters aufgesetzt sind, wobei die Halter an den Endstücken befestigt sind, und dass der Adapter Befestigungsaufnahmen zur Verbindung des Leitungs-Rückzugssystem mit einem Industrieroboter aufweist. Über den Adapter können die beiden Halter und damit die beiden Führungsstangen exakt zueinander positioniert und ausgerichtet werden. Zusammen mit dem Adapter bildet das Leitungs-Rückzugssystem eine einheitlich handhabbare Baueinheit, die vormontiert und mit dem Industrieroboter verbunden werden kann.

Die Erfindung wird im Folgenden anhand eines in den Zeichnungen dargestellten Ausführungsbeispiels näher erläutert. Es zeigen:
- Figur 1: in perspektivischer Seitenansicht ein Leitungs-Rückzugssystem,
- Figur 2: das Leitungs-Rückzugssystem gemäß Figur 1 mit einer abgenommenen Abdeckung,
- Figur 3: die in Figur 2 dargestellte Baueinheit in einer veränderten perspektivischen Darstellung und
- Figur 4: das Leitungs-Rückzugssystem gemäß den Figuren 1 bis 3 in einer vergrößerten Detailansicht.

In den Zeichnungen ist ein Leitungs-Rückzugssystem dargestellt, welches mit einem Roboterarm eines Industrieroboters verbunden werden kann.

Das Leitungs-Rückzugssystem weist einen Adapter 10 in Form einer Platte auf. Der Adapter 10 besitzt zwei Endstücke 12, die mittels eines Verbindungsstücks 11 einteilig miteinander verbunden sind. Im Bereich der Endstücke 12 sind Befestigungsaufnahmen 13 und 14 vorgesehen. Der Adapter 10 selbst kann als Stanzteil aus einem Blechabschnitt hergestellt werden.

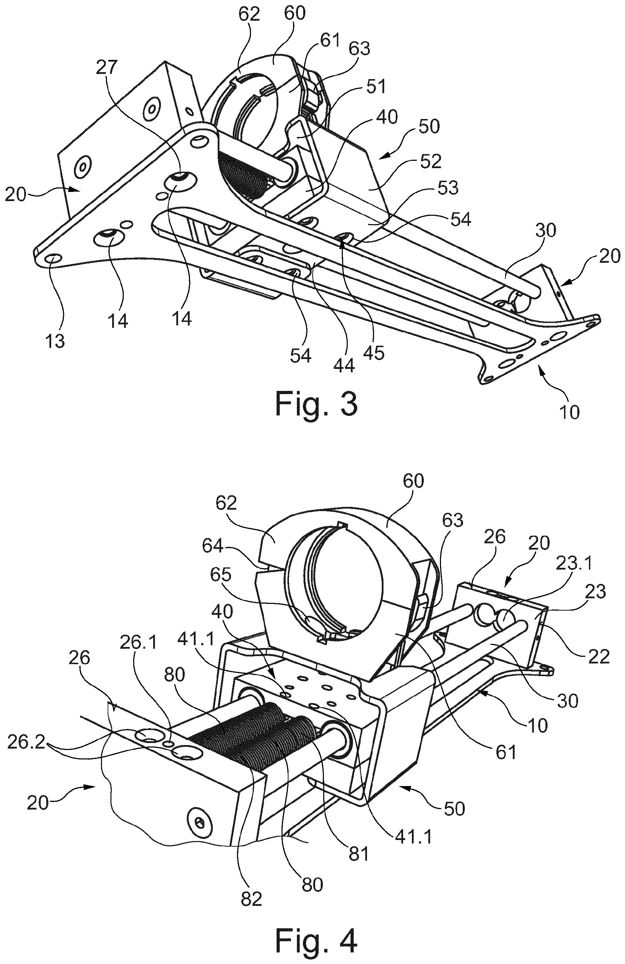

Mit dem Adapter 10 können zwei Halter 20 verbunden werden. Die Halter 20 sind blockartig ausgebildet und weisen eine im Wesentlichen quaderförmige Bauweise auf. Sie haben eine untere ebene Befestigungsfläche 21. In diese Befestigungsfläche 21 sind, wie dies Figur 3 erkennen lässt, Gewindeaufnahmen 27 eingeschnitten. Die Gewindeaufnahmen 27 können in Flucht zu den Befestigungsaufnahmen 14 im Adapter 10 gestellt werden. Durch die Befestigungsaufnahmen 14 können Befestigungsschrauben hindurchgeführt und in die Gewindeaufnahmen 27 eingeschraubt werden.

Aufgrund der einteiligen Ausbildung des Adapters 10 können die beiden Halter passgenau aufeinander ausgerichtet werden.

Das Leitungs-Rückzugssystem besitzt einen Schlitten 40. Dieser Schlitten 40 ist quaderförmigen aus einem Bauteil gefertigt. Denkbar ist es jedoch auch, dass der Schlitten mehrteilig aufgebaut ist.

Der Schlitten 40 besitzt einen oberen Deckabschnitt 41 und diesem gegenüberliegend einen Boden 44. Im Bereich zwischen dem Deckabschnitt 41 und dem Boden 44 sind Linearführungen 43 gehalten. Die Linearführungen 43 können beispielsweise von Kugelführungen gebildet sein.

Seitlich wird der Schlitten 40 von den beiden zueinander parallelen Seiten 42 begrenzt. In den Boden 44 sind Gewindeaufnahmen 45 eingebracht.

Mit dem Schlitten 40 kann eine Träger 50 verbunden werden. Der Träger 50 ist bügelartig ausgebildet. Er besitzt einen oberen Halteabschnitt 51. An den Halteabschnitt 51 schließen sich rechtwinklig an gegenüberliegenden Seiten Distanzstücke 52 an. Von den Distanzstücken 52 sind wiederum zwei untere Befestigungsabschnitte 53 abgebogen. In die Befestigungsabschnitte 53 sind Schraubaufnahmen 54 eingebohrt.

Der Träger 50 kann einteilig ausgebildet sein. Denkbar ist es auch, dass der Träger zweiteilig aus zwei spiegelsymmetrisch aufgebauten Bügelteilen zusammengesetzt ist.

Zur Fixierung des Trägers 50 an dem Schlitten 40 wird der Träger 50 mit seinen beiden Befestigungsabschnitten 53 an den Boden 44 des Schlittens 40 angelegt. Dabei stehen die Schraubaufnahmen 54 der Befestigungsabschnitte 53 in Flucht zu den Gewindeaufnahmen 45 im Boden 44 des Schlittens 40. Durch die Schraubaufnahmen 54 lassen sich Befestigungsschrauben führen und in die Gewindeaufnahmen 45 einschrauben. Im montierten Zustand stehen die beiden zueinander parallelen Distanzstücke 52 im Abstand zu den Seiten 42 des Schlittens 40. Selbstverständlich müssen die beiden Distanzstücke nicht zueinander parallel stehen, sondern können auch zueinander winklig stehen.

Der Halteabschnitt 51 steht im Abstand zu dem Deckabschnitt 41 des Schlittens, wie dies Figur 4 deutlich erkennen lässt. Auf diese Weise wird zwischen dem Deckabschnitt 41 und dem Halteabschnitt 51 einen Abstandsbereich geschaffen. Weiterhin wird auch zwischen den Seiten 42 und den zugeordneten Distanzstücken 52 ein Abstandsbereich gebildet. Die Abstandsbereiche gehen ineinander über, wie Figur 4 zeigt.

Mit dem Träger 50 kann eine Befestigungsanordnung 60 verbunden werden. Wie Figur 4 zeigt, wird die Befestigungsanordnung 60 auf der dem Schlitten 40 abgewandten Seite des Halteabschnitts 51 befestigt.

Die Befestigungsanordnung 60 kann als Klemmschelle ausgebildet sein. Sie weist ein Unterteil 61 und ein Oberteil 62 auf. Unterteil 61 und Oberteil 62 können mit einem Scharnier 63 vorzugsweise einteilig mit einem Filmscharnier miteinander verbunden sein. Gegenüberliegend dem Scharnier 63 ist ein Verschluss 64 vorgesehen. Der Verschluss 64 kann beispielsweise eine Rastverbindung zwischen dem Unterteil 61 und dem Oberteil 62 ausbilden.

Die Befestigungsanordnung 60 weist Schraubaufnahmen 65 auf. Diese Schraubaufnahmen 65 können in Flucht zu Befestigungsaufnahmen des Halteabschnitts 51 des Trägers 50 gestellt werden. Unter Zuhilfenahme der Schraubaufnahmen und der Befestigungsaufnahmen kann die Befestigungsanordnung 60 mit dem Träger 50 verbunden werden.

Durch die Linearführungen 43 lassen sich Führungsstangen 30 hindurchschieben. Auf diese Weise ist der Schlitten 40 linear verstellbar und mit den Linearführungen 43 geführt auf den Führungsstangen 30 verschiebbar.

Die Führungsstangen 30 weisen jeweils an ihren gegenüberliegenden Seiten Enden 31 auf. Mit diesen Enden 31 sind die Führungsstangen 30 in Aufnahmen 24 der Halter 20 eingesetzt. Die Aufnahmen 24 sind dabei in die einander zugewandten Vorderseiten 23 der Halter 20 eingearbeitet. In die stirnseitigen Enden 31 der Führungsstangen 30 sind Gewindeaufnahmen eingebracht. Zur Befestigung der Führungsstangen 30 werden Schrauben in Schraubaufnahmen 25.1, welche ausgehend von der Rückseite 25 in die Halter 20 eingearbeitet sind, eingesetzt und in die stirnseitigen Gewindeaufnahmen der Führungsstangen 30 eingeschraubt. Auf diese Weise sind die Führungsstangen 30 sicher an den Haltern 20 ausgerichtet und fixiert.

Wie Figur 4 erkennen lässt, können zwei Federn 80, welche als Spiralfedern und in Form von Zugfedern ausgebildet sind, mit ihrem einen Federende 81 mit dem Schlitten 40 verbunden werden. Zu diesem Zweck weist der Schlitten 40 im Bereich der dem linken Halter 20 zugewandten Seite eine Aufnahme auf. In diese Aufnahme kann eine endseitige Federöse am Federende 81 eingesteckt werden. Die Federöse ist in Form eines Auges ausgebildet, das in der Aufnahme des Schlittens 40 in Flucht zu einer Gewindeaufnahme 41.1 steht. Die Gewindeaufnahme 41.1 ist in den Deckabschnitt 41 des Schlittens eingebracht. Nun kann, bei eingestecktem Federende 81, eine Schraube, beispielsweise eine Madenschraube, in die Gewindeaufnahme 41.1 eingeschraubt werden. Diese Schraube durchgreift die Federöse und legt sie formschlüssig an dem Schlitten 40 fest. Auf diese Weise ist das Federende 81 zuverlässig mit dem Schlitten 40 fixiert.

In gleicher Weise ist das gegenüberliegende Federende 82 mit dem in Figur 4 linksseitigen Halter 20 verbunden. Auch hier ist am Federende 82 eine Federöse vorgesehen. Diese ist in eine Aufnahme 23.1 (siehe Figur 4), welche in der Vorderseite 23 des Halters 20 eingearbeitet sind, eingesetzt. In die Aufnahmen 23.1 münden Gewindeaufnahmen 26.2. Mittels Schrauben können die Federösen an den Federende 82 dann hier in entsprechender Weise an dem Halter 20 formschlüssig angekoppelt werden.

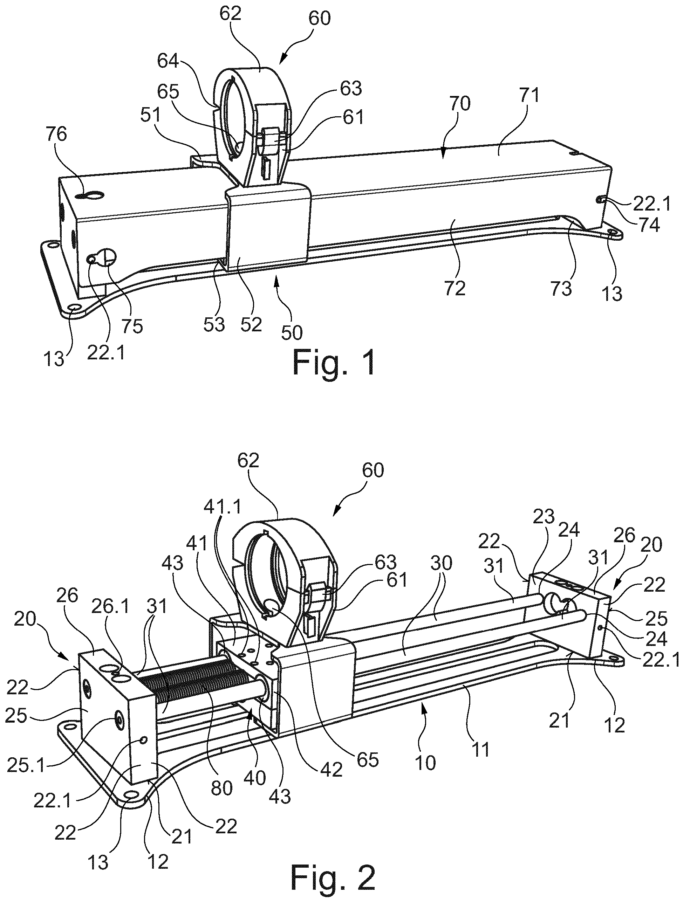

Zur Montage des Leitungs-Rückzugssystems wird zunächst der Träger 50 mit dem Schlitten 40 verschraubt. Anschließend wird die Befestigungsanordnung 60 mit dem Halteabschnitt 51 des Trägers 50 verbunden. Dann werden die Führungsstangen 30 durch die Linearführungen 43 hindurchgesteckt. Anschließend lassen sich auf die Enden 31 der Führungsstangen 30 die Halter 20 aufstecken und daran befestigten. Die Halter 20 werden dann mit dem Adapter 10 verschraubt. Schließlich werden die Federn 80 mit dem Schlitten 40 und dem in Figur 4 linksseitigen Halter 20 verbunden. Das Leitung-Rückzugssystem steht dann in der in den Figuren 2 bis 4 gezeigten Form zur Verfügung. Abschließend lässt sich mit dem Leitungs-Rückzugssystem eine Abdeckung 70 verbinden.

Die Abdeckung 70 ist im Querschnitt U-förmig aus vorzugsweise einem Blech-Stanz-Biegeteil einteilig gefertigt.

Die Abdeckung 70 besitzt eine Deckwand 71, von der zwei Seitenwände 72 abgewinkelt sind. Auf den der Deckwand 71 abgewandten Seite weisen die Seitenwände 72 Durchführungen 73 auf. Die Durchführungen 73 sind in Form von Aussparungen ausgebildet, welche von den freien Enden der Seitenwände 72 ausgenommen sind.

Die Abdeckung 70 ist an ihren längsseitigen Enden mit Schraubaufnahmen 74, 75, 76 versehen. Diese Schraubaufnahmen 74, 75, 76 sind sowohl im Bereich der Deckwand 71 als auch der Seitenwände 72 vorgesehen.

Zur Montage der Abdeckung 70 wird diese mit einem ihrer längsseitigen Enden durch den Abstandsbereich zwischen dem Träger 50 und dem Schlitten 40 in Richtung der Längserstreckung der Führungsstangen 30 hindurchgeschoben. Anschließend werden die Enden der Abdeckung 70 auf die Halter 20 aufgesetzt. Dabei liegt die Deckwand 71 der Abdeckung 70 auf den Deckwänden 26 der Halter 20 auf. Die Seitenwände 72 der Abdeckung 70 liegen an den Seitenwänden 22 der Halter 20 an. Die Schraubaufnahmen 74, 75, 76 stehen in Flucht zu Gewindeaufnahmen 22.1 in den Seitenwänden 22 der Halter 20 bzw. in Flucht zu Gewindeaufnahmen 26.1 in der Deckwand 26 der Halter 20. Mit Befestigungsschrauben kann die Abdeckung 70 dann mit den Haltern 20 verbunden werden. Auf diese Weise verschließen die Halter 20 mit ihrer Geometrie die längsseitigen Enden der Abdeckung 70.

Figur 1 lässt den End-Montagezustand erkennen. Wie diese Darstellung zeigt, durchgreift der Träger 50 mit seinen Befestigungsabschnitten 53 die Durchführungen 73 in den Seitenwänden 72 der Abdeckung 70. Die Distanzstücke 52 und der Halteabschnitt 51 sind im Abstand zu den Seitenwänden 72 und der Deckwand 71 der Abdeckung geführt. Der Halteabschnitt 51 des Trägers 50 trägt oberhalb, auf seiner der Deckwand 71 abgewandten Seite die Befestigungsanordnung 60.

Zur Montage des in Figur 1 gezeigten Leitungs-Rückzugssystems wird der Adapter 10 auf eine entsprechend gestaltete Gegenfläche auf dem Roboterarm des Industrieroboters gesetzt. Zur Verbindung mit dem Industrieroboter werden Befestigungsschrauben durch die Befestigungsaufnahmen 13 in den Endstücken 12 des Adapters 10 hindurchgeführt und in Gewindeaufnahmen des Industrieroboters eingeschraubt.

Bei geöffneter Befestigungsanordnung 60 wird die zu führende Zuführanordnung, beispielsweise eine Leitung oder ein Schlauchabschnitt in das Unterteil 61 eingelegt. Anschließend wird das Oberteil 62 geschlossen, sodass die Zuführanordnung zwischen dem Unterteil 61 und dem Oberteil 62 geklemmt gehalten ist. Abschließend lässt sich die Zuführanordnung fixieren, in dem der Verschluss 64 geschlossen wird.

Wenn nun die fixierte Zuführanordnung in der Bildebene gemäß Figur 1, bedingt durch eine Bewegung der Roboterhand des Industrieroboters nach rechts gezogen wird, so verfährt der Schlitten 40 auf den Führungsstangen 30 ebenfalls in der Bildebene nach rechts. Dabei werden die Federn 80 gespannt. Wird nun die Zuführanordnung in Folge einer Bewegung des Industrieroboters wieder entlastet, so ziehen die Federn 80 den Schlitten 40 wieder zurück, sodass die Zuführanordnung stets gespannt gehalten ist.

## Patentansprüche

1. Leitungs-Rückzugssystem für einen Industrieroboter zur Straffung zumindest einer entlang eines Roboterarms geführten Zuführanordnung, insbesondere eines Zuführschlauchs und/oder einer Zuführungsleitung und/oder eines Leitungspakets zum Längenausgleich in Folge einer Bewegung des Roboterarms, mit zwei Führungsstangen (30), auf oder an denen ein Schlitten (40) gelagert und längs der Führungsstangen (30) gegen die Vorspannung wenigstens einer Feder (80) verstellbar ist,
wobei die Führungsstangen (30) an Haltern (20) befestigt sind, wobei der Schlitten (40) zwischen den Haltern (20) geführt ist,
wobei an dem Schlitten (40) eine Befestigungsanordnung (60) für die Zuführanordnung befestigt ist,
wobei an den Haltern (20) eine Verkleidung zur zumindest bereichsweisen Abdeckung des Schlittens (40) gehalten ist,
wobei die Verkleidung von einer Abdeckung (70) gebildet ist, wobei die Abdeckung (70) eine Deckwand (71) aufweist, an die zwei Seitenwände (72) angeschlossen sind, wobei
die Seitenwände (72) jeweils eine Durchführung (73) aufweisen, und wobei
die Befestigungsanordnung (60) auf einem bügelförmigen Träger (50) befestigt ist, wobei der bügelförmige Träger (50) einen Halteabschnitt (51) aufweist, der die Befestigungsanordnung (60) trägt und oberhalb der Deckwand (71) hält.

2. Leitungs-Rückzugssystem nach Anspruch 1, **dadurch gekennzeichnet, dass** an den Halteabschnitt (51) zwei seitliche Distanzstücke (52) angeschlossen sind, wobei die Distanzstücke (52) im Abstand zu den Außenseiten der beiden Seitenwände (72) der Abdeckung (70) geführt sind, und dass von den Distanzstücken (52) jeweils ein Befestigungsabschnitt (53) abgewinkelt ist, der durch die ihm jeweils zugeordnete Durchführung (73) der Seitenwand (72) der Abdeckung (70) hindurchgeführt und mit dem Schlitten (40) verbunden ist.

3. Leitungs-Rückzugssystem nach Anspruch 1 oder 2, **dadurch gekennzeichnet, dass** die Seitenwände (72) im Bereich ihrer, der Deckwand (71) abgewandten Seiten mit jeweils einer Ausnehmung versehen sind, die die Durchführungen (73) bilden.

4. Leitungs-Rückzugssystem nach einem der Ansprüche 1 bis 3, **dadurch gekennzeichnet, dass** die Abdeckung (70) haubenartig und im Querschnitt U-förmig mit der Deckwand (71) und den beiden Seitenwänden (72) ausgebildet ist, dass die Abdeckung (70) mit ihren längsseitigen Enden an die Halter (20) angekoppelt und mit diesen verbunden ist, wobei die Halter (20) die längsseitigen, von der Deckwand (71) und den beiden Seitenwänden (72) der Abdeckung (70) gebildeten Öffnungsbereiche, verschließen.

5. Leitung-Rückzugssystem nach einem der Ansprüche 1 bis 4, **dadurch gekennzeichnet, dass** die Abdeckung (70) als Stanz-Biegeteil aus einem Blechzuschnitt gefertigt ist.

6. Leitungs-Rückzugssystem nach einem der Ansprüche 1 bis 5, **dadurch gekennzeichnet, dass** die wenigstens eine Feder (80) als Zugfeder ausgebildet ist, die an ihren, dem Schlitten (40) zugewandten Federende (81) eine Federöse aufweist, wobei diese Federöse in eine Aufnahme des Schlittens (40) eingeschoben ist, dass eine, in den Schlitten (40) eingebrachte Befestigungsaufnahme, insbesondere eine Gewindeaufnahme (41.1) in dem Bereich der Aufnahme des Schlittens (40) mündet, und dass ein Befestigungselement, insbesondere ein Schraubelement, welches in die Befestigungsaufnahme des Schlittens (40) eingesetzt ist, in die Federöse eingreift und diese formschlüssig festhält.

7. Leitungs-Rückzugssystem nach einem der Ansprüche 1 bis 6, **dadurch gekennzeichnet, dass** die wenigstens eine Feder (80) als Zugfeder ausgebildet ist, die an ihren, einem Halter (20) zugewandten Federende (82) eine Federöse aufweist, wobei diese Federöse in eine Aufnahme des Halters (20) eingeschoben ist, dass eine, in den Halter (20) eingebrachte Befestigungsaufnahme, insbesondere eine Gewindeaufnahme (41.1) in dem Bereich der Aufnahme des Halters (20) mündet, und dass ein Befestigungselement, insbesondere ein Schraubelement, welches in die Befestigungsaufnahme des Halters (20) eingesetzt ist, in die Federöse eingreift und diese formschlüssig festhält.

8. Leitungs-Rückzugssystem nach einem der Ansprüche 1 bis 7, **dadurch gekennzeichnet, dass** der Schlitten (40) an seinem, der Deckwand (71) der Abdeckung (70) abgewandten Seite einen Boden (44) aufweist, in den Gewindeaufnahmen (45) eingebracht sind, dass der Träger (50) mit seinen beiden Befestigungsabschnitten (53) an dem Boden (44) anliegt, und dass die Befestigungsabschnitte (53) mit dem Boden (44) mittels der Gewindeaufnahmen (45) verschraubt sind.

9. Leitungs-Rückzugssystem nach einem der Ansprüche 1 bis 8, **dadurch gekennzeichnet, dass** der Träger (50) als ein Stanz-Biegeteil aus einem Blechzuschnitt gefertigt ist oder, dass zwei oder mehrere Stanz-Biegeteile den Halter (50) bilden, wobei diese zwei oder mehreren Stanz-Biegeteile vorzugsweise baugleich ausgeführt sind.

10. Leitungs-Rückzugssystem nach einem der Ansprüche 1 bis 9, **dadurch gekennzeichnet, dass** der Halteabschnitt (51) des Trägers (50) im Abstand zu einem Deckabschnitt (41) des Schlittens (40) und die Distanzstücke (52) des Trägers (50) im Abstand zu zugeordneten Seiten (42) des Schlittens (40) stehen, um einen durchgehenden Abstandsbereich zu schaffen, und dass die Abdeckung (70) so dimensioniert ist, dass sie mit ihrem stirnseitigen Ende durch diesen Abstandsbereich hindurch gesteckt und in ihre Montageposition gebracht werden kann.

11. Leitungs-Rückzugssystem, nach einem der Ansprüche 1 bis 10, **dadurch gekennzeichnet, dass** der Adapter (10) zwei Endstücke (12) aufweist, die mittels eines Verbindungsstücks (11) vorzugsweise einteilig miteinander verbunden sind, dass die beiden Halter (20) vorzugsweise baugleich ausgeführt sind und eine Befestigungsfläche (21) aufweisen, mit der sie auf die Oberseite des plattenförmigen Adapters (10) aufgesetzt sind, wobei die Halter (20) an den Endstücken (12) befestigt sind, und dass der Adapter (10) Befestigungsaufnahmen (13) zur Verbindung des Leitungs-Rückzugssystem mit einem Industrieroboter aufweist.

## Claims

1. Line retraction system for an industrial robot for tightening at least one feed arrangement guided along a robot arm, in particular a feed hose and/or a feed line and/or a line package for length compensation as a result of a movement of the robot arm, having two guide rods (30) on or at which a carriage (40) is mounted and can be adjusted along the guide rods (30) against the prestress of at least one spring (80), the guide rods (30) being fastened to holders (20), the carriage (40) being guided between the holders (20),
wherein a fastening arrangement (60) for the feed arrangement is fastened to the carriage (40),
wherein a covering is held on the holders (20) for covering the carriage (40) at least in regions,
the covering being formed by a cover (70), the cover (70) having a top wall (71) to which two side walls (72) are connected,
wherein the side walls (72) each have a passage (73),
and wherein the fastening arrangement (60) is mounted on a bracket-shaped support (50), the bracket-shaped support (50) having a retaining portion (51) which supports the fastening arrangement (60) and retains it above the top wall (71).

2. Line retraction system according to claim 1, **characterized in that** two lateral spacers (52) are connected to the retaining portion (51), the spacers (52) being guided at a distance from the outer sides of the two side walls (72) of the cover (70), and **in that** one fastening section (53) is angled off of each of the spacers (52), which fastening section (53) is guided through the respective passage (73) of the side wall (72) of the cover (70) assigned to it and is connected to the carriage (40).

3. Line retraction system according to claim 1 or 2, **characterized in that** the side walls (72) are each provided with a recess in the region of their sides facing away from the top wall (71), which recesses form the passages (73).

4. Line retraction system according to one of claims 1 to 3, **characterized in that** the cover (70) is hood-like and U-shaped in cross-section with the top wall (71) and the two side walls (72), that the cover (70) is coupled with its longitudinal ends to the holders (20) and connected thereto, wherein the holders (20) close the longitudinal opening regions formed by the top wall (71) and the two side walls (72) of the cover (70).

5. Line retraction system according to any one of claims 1 to 4, **characterized in that** the cover (70) is manufactured as a punched and bent part from a sheet metal blank.

6. Line retraction system according to one of the claims 1 to 5, **characterized in that** the at least one spring (80) is designed as a tension spring which has a spring eyelet at its spring end (81) facing the carriage (40), this spring eyelet being inserted into a receptacle of the carriage (40), **in that** a fastening receptacle, in particular a threaded receptacle (41.1) inserted into the carriage (40) opens into the region of the receptacle of the carriage (40), and **in that** a fastening element, in particular a screw element, which is inserted into the fastening receptacle of the carriage (40), engages in the spring eyelet and holds it in place in a form-fitting manner.

7. Line retraction system according to one of claims 1 to 6, **characterized in that** the at least one spring (80) is designed as a tension spring which has a spring eyelet at its spring end (82) facing a holder (20), this spring eyelet being inserted into a receptacle of the holder (20), **in that** a fastening receptacle, in particular a threaded receptacle (41.1) inserted into the holder (20) opens into the region of the receptacle of the holder (20), and **in that** a fastening element, in particular a screw element, which is inserted into the fastening receptacle of the holder (20) engages in the spring eyelet and holds it in place in a form-fitting manner.

8. Line retraction system according to one of the claims 1 to 7, **characterized in that** the carriage (40) has a base (44) on its side facing away from the top wall (71) of the cover (70), into which base threaded receptacles (45) are introduced, **in that** the support (50) rests with its two fastening sections (53) against the base (44), and **in that** the fastening sections (53) are screwed to the base (44) by means of the threaded receptacles (45).

9. Line retraction system according to one of the claims 1 to 8, **characterized in that** the support (50) is manufactured as a stamped and bent part from a sheet metal blank or that two or more stamped and bent parts form the support (50), wherein these two or more stamped and bent parts are preferably of identical construction.

10. Line retraction system according to any one of claims 1 to 9, **characterized in that** the retaining portion (51) of the support (50) is spaced from a cover portion (41) of the carriage (40) and the spacers (52) of the support (50) are spaced from associated sides (42) of the carriage (40) to provide a continuous spacing region, and **in that** the cover (70) is dimensioned such that it can be inserted with its end face through this spacing region and brought into its mounting position.

11. Line retraction system, according to any one of claims 1 to 10, **characterized in that** the adapter (10) has two end pieces (12) which are connected to one another, preferably in one piece, by means of a connecting piece (11), **in that** the two holders (20) are preferably of identical construction and have a fastening surface (21) with which they are placed on the upper side of the plate-shaped adapter (10), the holders (20) being fastened to the end pieces (12), and **in that** the adapter (10) has fastening receptacles (13) for connecting the line retraction system to an industrial robot.

## Revendications

1. Système de retrait de conduite pour un robot industriel destiné à tendre au moins un dispositif d'alimentation guidé le long d'un bras de robot, en particulier un tuyau d'alimentation et/ou une conduite d'alimentation et/ou un paquet de conduites pour la compensation de longueur à la suite d'un mouvement du bras de robot, avec deux barres de guidage (30), sur ou contre lesquelles un chariot (40) est logé et peut être déplacé le long des barres de guidage (30) contre la précontrainte d'au moins un ressort (80),
les barres de guidage (30) étant fixées sur des supports (20), le chariot (40) étant guidé entre les supports (20),
un ensemble de fixation (60) pour le dispositif d'alimentation étant fixé sur le chariot (40),
un habillage étant maintenu sur les supports (20) pour recouvrir au moins une partie du chariot (40),
l'habillage étant formé par un couvercle (70), le couvercle (70) présentant une paroi de couverture (71) à laquelle sont raccordées deux parois latérales (72),
les parois latérales (72) présentant chacune un passage (73),
et dans lequel l'ensemble de fixation (60) est fixé sur un support (50) en forme d'étrier, le support (50) en forme d'étrier comportant une partie de retenue (51) qui supporte l'ensemble de fixation (60) et le maintient au-dessus de la paroi de couverture (71).

2. Système de retrait de conduite selon la revendication 1, **caractérisé en ce que** deux pièces d'écartement latérales (52) sont raccordées à la section de retenue (51), les pièces d'écartement (52) étant guidées à distance des côtés extérieurs des deux parois latérales (72) du couvercle (70), et **en ce qu'**une section de fixation (53) est coudée à partir des pièces d'écartement (52), laquelle est guidée à travers le passage (73) de la paroi latérale (72) du couvercle (70) qui lui est respectivement associé et est reliée au chariot (40).

3. Système de retrait de conduite selon la revendication 1 ou 2, **caractérisé en ce que** les parois latérales (72) sont pourvues, dans la zone de leurs côtés opposés à la paroi de couverture (71), d'un évidement respectif qui forme les passages (73).

4. Système de retrait de conduite selon l'une des revendications 1 à 3, **caractérisé en ce que** le couvercle (70) est réalisé à la manière d'un capot et en forme de U en section transversale avec la paroi de couverture (71) et les deux parois latérales (72), **en ce que** le couvercle (70) est couplé par ses extrémités longitudinales aux supports (20) et relié à ceux-ci, les supports (20) fermant les zones d'ouverture longitudinales formées par la paroi de couverture (71) et les deux parois latérales (72) du couvercle (70).

5. Système de retrait de conduite selon l'une des revendications 1 à 4, **caractérisé en ce que** le couvercle (70) est fabriqué sous forme de pièce découpée et pliée à partir d'une découpe de tôle.

6. Système de retrait de conduite selon l'une des revendications 1 à 5, **caractérisé en ce que** le au moins un ressort (80) est conçu comme un ressort de traction qui présente un œillet de ressort à son extrémité de ressort (81) tournée vers le chariot (40), cet œillet de ressort étant inséré dans un logement du chariot (40), **en ce qu'**un logement de fixation, en particulier un logement fileté (41.1) débouche dans la zone du logement du chariot (40), et **en ce qu'**un élément de fixation, notamment un élément à vis, qui est inséré dans le logement de fixation du chariot (40), s'engage dans l'œillet de ressort et maintient celui-ci par complémentarité de formes.

7. Système de retrait de conduite selon l'une des revendications 1 à 6, **caractérisé en ce que** le au moins un ressort (80) est conçu comme un ressort de traction qui présente un œillet de ressort à son extrémité de ressort (82) tournée vers un support (20), cet œillet de ressort étant inséré dans un logement du support (20), **en ce qu'**un logement de fixation, en particulier un logement fileté (41.1) débouche dans la zone du logement du support (20), et **en ce qu'**un élément de fixation, notamment un élément à vis, qui est inséré dans le logement de fixation du support (20), s'engage dans l'œillet à ressort et maintient celui-ci par complémentarité de formes.

8. Système de retrait de conduite selon l'une des revendications 1 à 7, **caractérisé en ce que** le chariot (40) présente, sur son côté opposé à la paroi de couverture (71) du couvercle (70), un fond (44) dans lequel sont ménagés des logements filetés (45), **en ce que** le support (50) s'applique par ses deux sections de fixation (53) contre le fond (44), et **en ce que** les sections de fixation (53) sont vissées au fond (44) au moyen des logements filetés (45).

9. Système de retrait de conduite selon l'une des revendications 1 à 8, **caractérisé en ce que** le support (50) est fabriqué sous la forme d'une pièce estampée et pliée à partir d'un flan de tôle ou **en ce que** deux ou plusieurs pièces estampées et pliées forment le support (50), ces deux ou plusieurs pièces estampées et pliées étant de préférence de construction identique.

10. Système de retrait de conduite selon l'une des revendications 1 à 9, **caractérisé en ce que** la section de retenue (51) du support (50) est située à distance d'une section de recouvrement (41) du chariot (40) et les pièces d'écartement (52) du support (50) sont situées à distance de côtés associés (42) du chariot (40) afin de créer une zone d'écartement continue, et **en ce que** le couvercle (70) est dimensionné de telle sorte qu'il peut être inséré avec son extrémité frontale à travers cette zone d'écartement et amené dans sa position de montage.

11. Système de retrait de conduite selon l'une des revendications 1 à 10, **caractérisé en ce que** l'adaptateur (10) présente deux pièces d'extrémité (12) qui sont reliées entre elles, de préférence d'un seul tenant, au moyen d'une pièce de liaison (11), **en ce que** les deux supports (20) sont de préférence de construction identique et présentent une surface de fixation (21), par laquelle ils sont placés sur la face supérieure de l'adaptateur (10) en forme de plaque, les supports (20) étant fixés aux pièces d'extrémité (12), et **en ce que** l'adaptateur (10) présente des logements de fixation (13) pour relier le système de retrait de ligne à un robot industriel.
